# EUROPÄISCHE PATENTANMELDUNG

(11) **EP 3 760 365 A1**
(43) Veröffentlichungstag der Anmeldung: **06.01.2021**
(21) Anmeldenummer: 20181342.5
(22) Anmeldetag: 22.06.2020
(51) Int. Cl.: B23K 26/08, B23K 26/302, B23K 26/282, B21C 37/26, F28F 1/36, B21C 37/22, B23K 9/173, B23K 1/00, B23K 26/144, B23K 101/14

(54) **VERFAHREN ZUR HERSTELLUNG EINES RIPPENROHRES UND RIPPENROHR**

(30) Priorität: 28.06.2019 DE 102019117597
(71) Anmelder: Schmöle GmbH, 58730 Fröndenberg (DE)
(72) Erfinder: Störmer, Gerhard, 58313 Herdecke (DE)
(74) Vertreter: Roche, von Westernhagen & Ehresmann

(57) **Zusammenfassung**

Beschrieben und dargestellt ist ein Verfahren zur Herstellung eines Rippenrohres (10), bei welchem ein, insbesondere aus Edelstahl oder Kupfer bestehender, Rohrgrundkörper () auf seiner Außenseite (),mit einem, insbesondere aus Kupfer bestehenden, Band (), vorzugsweise wendelförmig, berippt wird, wozu das Band () an dem Rohrgrundkörper () unter Einsatz eines Laserstrahls () befestigt, insbesondere verschweißt, wird.

Die Besonderheit besteht darin, dass dem Kontaktbereich von Rohrgrundkörper und Band Zusatzmaterial zugeführt wird, dessen Zusammensetzung derjenigen von Rohrgrundkörper- und/oder Bandmaterial entspricht.

## Beschreibung

Die Erfindung betrifft ein Verfahren zur Herstellung eines Rippenrohres, bestehend aus einem rundrohrartigen Rohrgrundkörper, welcher zur Verbesserung der Wärmetransfereigenschaften, beispielsweise wendelförmig, mit einem durchlaufenden Band berippt wird. Solche Rippenrohre werden in Wärmetauschern eingesetzt und hierzu typischerweise von einem Fluid, wie erwärmtem Wasser, durchlaufen. Die in derartigen Wärmetauschern eingesetzten Rippenrohre können selbst eine Wendelform aufweisen.

Bevorzugterweise weisen derartige Rippenrohre auch eine innere Drall- oder Verwirbelungsstruktur auf, welche eine optimierte Temperaturübertragung ermöglicht.

Rippenrohre des Standes der Technik werden beispielsweise in einem Walzverfahren hergestellt, bei welchem die Rippen auf der Außenseite des ursprünglich glatten Rohrkörpers herausgewalzt werden und gegebenenfalls sogar noch die innere Verwirbelungsstruktur mit demselben Werkzeug durchdrückbar ist.

Da in einem Walzvorgang aber typischerweise eher lediglich vergleichsweise kurze Rippen herstellbar bzw. auswalzbar sind, sind aus dem Stand der Technik bereits Rippenrohre bekannt, bei welchen das Band mit Hilfe eines Laserschweißverfahrens an der Außenseite des Rohrgrundkörpers befestigt wird. Im selben Verfahrensschritt kann dabei zudem noch eine innere Verwirbelungsstruktur mit Hilfe von Druckscheiben oder Walzen erzeugt werden. Ein derartiges Verfahren ist beispielsweise aus der nachveröffentlichten DE 10 2017 105 254 der Anmelderin bekannt.

Bei Rohrkörpern mit relativ großen Wandstärken ist ein Laserschweiss-Vorgang in der Regel relativ komfortabel möglich. Allerdings muss die Wandstärke der gewählten Rohrgrundkörper typischerweise bei deutlich mehr als 0,5 mm liegen, da der Laserschweiss-Vorgang ein Aufschmelzen des Rohrgrundkörpermaterials, z.B. in einem Bereich von mindestens bis zu 0,3 mm, bewirkt (sogenannter Einbrand). Daher geht man im Stand der Technik davon aus, dass Rohrgrundkörper mit einer Wandstärke von beispielsweise weniger als 0,6 mm für ein derartiges Laserschweiss-Verfahren zum Anbringen von Bändern an Rohrgrundkörpern nicht geeignet sind.

Die Aufgabe der Erfindung besteht ausgehend von dem geschilderten Stand der Technik demnach darin, ein verbessertes Verfahren zur Herstellung eines Rippenrohres zu erwirken, mit welchem auch die Verwendung relativ dünnwandiger Rohrgrundkörper ermöglicht wird.

Die Erfindung löst die gestellte Aufgabe gemäß einem ersten Aspekt mit den Merkmalen des Anspruches 1 und ist demnach insbesondere dadurch gekennzeichnet, dass dem Kontaktbereich von Rohrgrundkörper und Band Zusatzmaterial zugeführt wird, dessen Materialzusammensetzung, insbesondere derjenigen des Rohrgrundkörpers und/oder Bandes entspricht.

Mit anderen Worten besteht die Idee der Erfindung darin, vor oder während des Lasersschweiss-Vorganges zur Anbringung des Bandes an dem Rohrgrundkörper, Material in den Schweissnahtbereich einzubringen, um die Stabilität des hergestellten Rippenrohres zu erhöhen. Dieses Material entspricht dabei vorzugsweise entweder dem Material des Rohrgrundkörpers oder dem Material des Bandes oder einer Mischung aus beiden Materialien. Hierdurch wird eine gewisse Materialeinheitlichkeit erreicht und eine im Wesentlichen einstückig-stoffschlüssige Schweissnaht.

Noch anders ausgedrückt kann mit der Erfindung Rohrgrundkörper- und/oder Bandmaterial in den Laserstrahl "injiziert" werden.

Auf diese Weise kann dieses Zusatzmaterial beispielsweise gemeinsam mit dem Material des Rohrgrundkörpers und des Bandes vom Laser angeschmolzen bzw. aufgeschmolzen werden und eine gemeinsame Schmelze bilden, welche den Vorteil aufweist, dass diese Schmelze keine Verunreinigungen aufweist, da sie lediglich Materialien enthält, aus welchen der Rohrgrundkörper und/oder das Band auch bestehen.

Nachdem sich die Schmelze verfestigt hat, kann dann eine homogene Naht entstehen. Vorteilhafterweise entsteht durch die Hinzugabe des Zusatzmaterials eine stabilisierende Materialansammlung, insbesondere ein Fuß, im Kontakt- oder Stoßbereich von Band und Rohrgrundkörper.

Eine derartige Materialansammlung, bzw. ein solcher Fuß, entsteht bei einem herkömmlichen Laserschweiss-Vorgang nicht. Dies wird allgemein als Nachteil im Vergleich zu einem Walzvorgang gesehen, bei welchem aufgrund des Materialflusses typischerweise (durchgehende) Füße entstehen. Allgemein kann mit dem erfindungsgemäßen Verfahren daher eine Stabilität erreicht werden, wie sie von einem Walzvorgang bekannt ist, während die Vorteile der langen Rippen des Laserschweissens erhalten bleiben.

Der Fuß ist insbesondere lediglich auf einer Bandseite vorgesehen und/oder umfasst die Schweissnaht.

Aufgrund der Hinzugabe des Zusatzmaterials kann man bei dem erfindungsgemäßen Verfahren auch von "Laserlöten" sprechen, wobei die Erfindung vorzugsweise (im technischen Sinne) keinen echten Lötvorgang betrifft, sondern vielmehr einen Schweissvorgang, da sich in der Schmelze typischerweise kein Fremdmaterial befindet.

Alternativ kann das "Lötmaterial" auch in fester Form vorliegen, bspw. in Form einer Lötschnur. Diese kann bspw. um dem Rohrgrundkörper herum verspannt werden, insbesondere in einer dem Rohrgrundkörper (vorzugsweise helixförmig) umgegebenen Nut.

Die Erfindung kann jedoch auch vorgesehen werden, wenn eine derartige Nut (welche typischerweise bei der Erzeugung einer Verwirbelungsstruktur im Inneren des Rohres durch ein Durchdrücken an der Außenseite erzeugt wird) nicht genutzt wird.

In diesen Fällen wird das Lötmaterial naturgemäß nicht in den Laserstrahl injiziert, sondern wird am Rohrgrundkörper (alternativ am Band) vor der Befestigung des Bandes angeordnet.

Eine Lötschnur kann hierbei bspw. maschinell verspannt werden.

Der besondere Vorteil der Erfindung liegt hierbei darin, dass es durch das Zusatzmaterial nunmehr auch bei Rohrgrundkörpern mit einer Wandstärke von 0,5 mm oder weniger möglich wird, ein Band in einem Laserschweissverfahren zur Bereitstellung eines Rippenrohres zu befestigen. Dadurch, dass (typischerweise während des Schweissvorganges) Zusatzmaterial zugeführt wird, besteht nicht die Gefahr, dass der Laser die Rohrgrundkörperwand so weit aufschmilzt (einbrennt), dass die Stabilität des gesamten Rippenrohres gefährdet ist. Vielmehr ermöglicht das Zusatzmaterial eine Kompensation und eine Stabilisierung.

Neben dem stabilisierenden Effekt weist das Zusatzmaterial aber auch den Vorteil auf, dass im Gegensatz zu einem normalen oder herkömmlichen Laserschweissverfahren zusätzliche oder additive Wärmetransportflächen ausgebildet werden. Diese können bei einem fertiggestellten Rippenrohr optisch erkennbar sein und dienen ebenfalls einer Verbesserung der Wärmetransporteigenschaften des Rippenrohres. Beispielsweise können diese Transportflächen Bestandteil eines sogenannten Fußes sein.

Bei dem Zusatzmaterial handelt es sich typischerweise entweder um dasselbe Material, welches auch für die Herstellung des Rohrgrundkörpers verwendet wurde oder um dasselbe Material, welches für die Herstellung des Bandmaterials verwendet wurde oder um einen Mix aus beiden Materialien/Materialbestandteilen.

Der Begriff "Materialzusammensetzung" umfasst im Sinne dieser Erfindung daher auch Materialien aus einem einzigen Werkstoff, wie z.B. Kupfer. So kann bei einem Band aus Kupfer beispielsweise Zusatzmaterial aus Kupfer verwendet werden. Diese Materialauswahl bezieht sich dabei auf die Außenseite des Rohrgrundkörpers, sollte dieser mehrere "Schichten" aufweisen (z.B. aus mehreren ineinandergesteckten Rohrteilen bestehen).

Das Zusatzmaterial wird erfindungsgemäß dem Kontaktbereich von Rohrgrundköper und Band zugeführt, also im Wesentlichen dem Bereich neben oder unmittelbar bei den Stoßkanten von Rohrgrundkörper und Band. Der Kontaktbereich beschreibt dabei nicht nur die reine (üblicherweise L-förmige) Kontaktfläche sondern den Bereich um die Kontaktfläche herum. Typischerweise reicht es, wenn das Zusatzmaterial auf einer Seite des Bandes zugeführt wird. Alternativ kann das Zusatzmaterial auch im Wesentlichen unterhalb des Bandes angeordnet sein, insbesondere auch für den Fall, dass das Band in einer Nut geführt bzw. angeordnet ist.

Das Zuführen bei einer pulverartigen Ausgestaltung des Zusatzmaterials kann vorteilhafterweise aus einem ähnlichen Winkel heraus erfolgen, wie die Einstrahlung des Laserstrahls, beispielsweise also unter einer Winkelausbildung der Hauptabgaberichtung des Zusatzmaterials zur Lasereinstrahlrichtung von weniger als 90 Grad.

Das Zusatzmaterial kann in den Bereich vorteilhafterweise eingeblasen werden und sollte daher in einem blasfähigen Zustand, beispielsweise als Pulver oder Staub, vorliegen.

Es wird bei der Abgabe typischerweise hin zu besagtem Kontaktbereich abgegeben, also im Wesentlichen in Richtung zur Basis des Bandes.

Vorteilhafterweise kann vorgesehen sein, dass das Zusatzmaterial auf seinem Weg in den Kontaktbereich (oder nach Erreichen des Kontaktbereiches) erwärmt wird, beispielsweise durch den Laserstrahl oder aber auch durch externe Wärmemittel. Das Pulver schwitzt an, typischerweise bevor es auf dem Band oder Rohrgrundkörper bzw. der Restschmelze auftrifft (oder im Kontaktbereich angelangt), und ist somit schon etwas angeheizt, was den Schweißprozess erleichtert.

Auch kann dem Laserstrahl ein (Laser-)Vorstrahl zugeordnet sein (kann z.B. von demselben Laser erzeugt werden), der ebenfalls (oder alternativ) das Zusatzmaterial erhitzt oder anschwitzt, dies insbesondere für den Fall des Einsatzes von festem Zusatzmaterial, welches von dem Vorstrahl an- oder aufgeschmolzen werden kann.

Das Band wird an dem Rohrgrundkörper vorzugsweise mit Hilfe eines Laserstrahls befestigt. Insbesondere wird ein Laserschweissverfahren verwendet.

Je nach Material kann eine geeignete Laserart eingesetzt werden. Typischerweise schlägt die Erfindung vor, einen Faserlaser zu verwenden. Dies kann aber je nach verwendeten Materialien und auch Fortschritt der Technik anders sein. Insbesondere kann der Fachmann, je nach Wahl des Materials von Rohrgrundkörper und Band, spektrale Eigenschaften dieser beiden Elemente berücksichtigen und einen geeigneten Laser auswählen.

Bei dem Material des Rohrgrundkörpers handelt es sich typischerweise um Kupfer oder auch Edelstahl oder auch Aluminium.

Der Rohrgrundkörper wird typischerweise von einem außen glatten Rundrohr bereitgestellt, welches in einer geraden oder stangenartigen Form vorliegt, und das in dem erfindungsgemäßen Verfahren weiter bearbeitet, insbesondere berippt, wird.

Das Band kann beispielsweise aus Kupfer bestehen (oder Aluminium). Grundsätzlich ist aber auch jedes andere geeignete Material verwendbar, wie zum Beispiel Edelstahl, Titanium oder ein anderes geeignetes Metall.

Das Band wird an dem Rohrgrundkörper mit Hilfe des Lasers typischerweise in einer Wendelform angebracht.

Anschließend kann der Rohrgrundkörper mit angeordnetem Band dann auch noch in eine gewünschte Endform hin verformt werden (insbesondere ausgehend von einem geraden Rippenrohrkörper).

Auch ist von der Erfindung umfasst, dass die Materialien von Band und Rohrgrundkörper (und Zusatzmaterial) übereinstimmen, also aus dem gleichen Material, wie beispielsweise Kupfer, bestehen. Das gesamte Rippenrohr wäre in diesem Fall also materialeinheitlich und insbesondere einstückig-stoffschlüssig ausgebildet.

Gemäß einer besonders vorteilhaften Ausgestaltung der Erfindung ist vorgesehen, dass Zusatzmaterial vor dem oder beim Befestigungsvorgang aufgeschmolzen wird. Das Zusatzmaterial kann also insbesondere Teil der Schweissnaht werden und/oder eine zusätzliche Materialansammlung, wie beispielsweise einen Fuß, ausbilden (auch gemeinsam mit den angeschmolzenen Materialien von Rohrgrundkörper und/oder Band). In diesem Sinne kann sich das aufgeschmolzene Zusatzmaterial also insbesondere mit dem an- oder aufgeschmolzenen Material des Rohrgrundkörpers oder des Bandes vermischen und anschließend aushärten.

Gemäß einer weiteren vorteilhaften Ausgestaltung der Erfindung wird das Zusatzmaterial im Wesentlichen während des Befestigungsvorganges zugeführt. Dies bedeutet also, dass das Material erst mit Bestrahlung durch den Laser oder kurz davor in den Kontaktbereich gelangt oder eingebracht wird. Grundsätzlich kann von der Erfindung aber auch ein Verfahren umfasst sein, bei welchem das Material (insbesondere in fester Form) bereits vor Einstrahlung durch den Laser in den Kontaktbereich eingebracht wird.

Wie oben bereits erwähnt, handelt es sich bei dem Befestigungsvorgang typischerweise um einem Laserschweissvorgang.

Vorteilhafterweise wird das Zusatzmaterial in Pulver- oder Staubform zugeführt. Dies weist den Vorteil auf, dass das Zusatzmaterial einerseits leichter aufschmelzbar und andererseits leichter zu handhaben ist. In diesem Sinne kann der Staub beispielsweise in den Kontaktbereich eingeblasen oder eingeschüttet oder dorthin gelenkt werden.

Alternativ ist es möglich, dass das Zusatzmaterial in fester Form in den Kontaktbereich eingebracht (z.B. eingelegt) wird, z. B. kann eine Lötschnur in eine äußere Nut des Rohres eingelegt und dort vorzugsweise verspannt werden. Diese Lötschnur kann anschließend an- oder aufgeschmolzen werden, bspw. entweder beim eigentlichen Schweißvorgang, oder durch einen Vorstrahl angeschmolzen bzw. ganz aufgeschmolzen werden.

Von der Erfindung ist in diesem Sinne auch umfasst, dass ein Lötbad an dem Rohrgrundkörper (vorzugsweise in der Nut) geschaffen wird, in welches das Band dann eingebracht wird (also ohne dass es dort noch extra verschweißt werden muss). Alternativ ist auch ein zusätzlicher Schweißverfahrensschritt möglich, sogar vorteilhaft

Entscheidend ist lediglich, dass es sich bei dem Zusatzmaterial nicht um Teile des herkömmlichen Bandes oder des herkömmlichen Grundkörpers handelt, sondern um ein separates und zusätzliches Material, welches vorzugsweise gleicher Art ist.

Sofern das Zusatzmaterial in Pulverform vorliegt, kann eine Abgabevorrichtung vorgesehen sein, welche das Pulver dem Kontaktbereich zuführt. Beispielsweise kann eine Sprühvorrichtung und/oder Abgabedüse vorgesehen sein, welche über Sprühluft und/oder Lenkluft das Pulver in den Kontaktbereich führt/sprüht (beispielsweise aus einer ähnlichen Abgaberichtung wie die des Lasers).

Gemäß einer weiteren vorteilhaften Ausführungsform des erfindungsgemäßen Verfahrens ist ein Verfahrensschritt vorgesehen, welcher das Erzeugen oder Übernehmen einer Drall- oder Verwirbelungsstruktur an der Innenseite des Rohrgrundkörpers betrifft. Bei der Drall- oder Verwirbelungsstruktur kann es sich insbesondere um eine materialeinheitliche, aus dem Rohrgrundkörper herausgearbeitete Struktur (wie eine Grat- oder Stegstruktur oder Ähnliches) handeln, welche in das Rohr hinein positiv vorsteht. Grundsätzlich ist aber auch selbstverständlich eine Nutform oder Ähnliches möglich, bei welcher eine oder mehrere Ausnehmungen bzw. Rücksprünge auf der Innenseite des Rohrgrundkörpers eine Drall- bzw. Verwirbelungsstruktur bilden.

Auch die Drall- oder Verwirbelungsstruktur an oder auf der Innenseite des Rohrgrundkörpers kann wendelförmig ausgebildet sein. Diese Wendel- oder Spiral- oder Helix- oder Korkenzieherform hat sich dabei als besonders geeignet zur Wärmeübertragung erwiesen. Die Wendelform kann insbesondere durchgängig ausgebildet sein oder auch unterbrochen. Erfindungsgemäß kann die Drall- oder Verwirbelungsstruktur eines vorbearbeiteten Rohrgrundkörpers schlicht übernommen werden. In diesem Fall erfolgt dann das Berippen in einem zweiten, nachgelagerten Schritt.

Vorteilhafterweise ist vorgesehen, dass die Drall- oder Verwirbelungsstruktur im Wesentlichen im selben Arbeitsschritt erzeugt wird, in dem auch das Band an dem Rohrgrundkörper befestigt wird.

Die Verwirbelungsstruktur kann insbesondere durch eine Druckbeaufschlagung der Rohrkörperaußenseite erzeugt werden. In diesem Sinne kann die Struktur also durch den Rohrkörper hindurchgedrückt werden, indem die gewünschte Struktur an der Rohrkörperaußenseite eingedrückt wird. In diesem Fall wäre die Struktur dann einstückig-stoffschlüssig mit dem Rohrkörper ausgebildet. Dies kann durch jedes geeignete Werkzeug, wie ein Walz- oder Prägewerkzeug oder Ähnliches, geschehen. Insbesondere kann hierfür eine Scheibenkante verwendet werden, derart, dass eine Scheibe auf die Außenseite des Rohrkörpers mit ihrer Kante drückt. Dies hat eine punkt- oder linienartige Beaufschlagung zur Folge, welche zur Schaffung der Drall- oder Verwirbelungsstruktur an der Körperinnenseite besonders gut geeignet ist.

Ein geeignetes Werkzeug hierfür kann beispielsweise einen Führungskörper für das Band aufweisen, welcher das Anstellen des Bandes an dem Rohrgrundkörper (und/oder den Rohrgrundkörper selbst) unterstützt, wobei der Führungs- oder Abstützkörper aber auch auf die Außenseite des Rohrgrundkörpers einwirken und diesen beispielsweise eindrücken kann (zur Schaffung der inneren Drall- oder Verwirbelungsstruktur). Bei dem Führungs- oder Abstützkörper kann es sich insbesondere um eine Führungs- oder Abstützscheibe, beispielsweise aus Titan oder einem anderen Metall, handeln, von welcher vorteilhafterweise mindestens drei, vorteilhafterweise mindestens fünf, vorgesehen sind. Das Band kann zwischen den Scheiben geführt werden. Ein derartiges Anstellwerkzeug kann dadurch für die Erzeugung oder das Durchdrücken einer Drall- oder Verwirbelungsstruktur sorgen, dass eine der mehreren Scheiben nach außen vorsteht (und einen größeren Radius aufweist als die anderen). Mit einem solchen Werkzeug erfolgt das Erzeugen der Struktur und das Berippen im Wesentlichen gleichzeitig.

Vorzugsweise ist vorgesehen, dass eine an der Außenseite des Rohrgrundkörpers vorgesehene Nut (bspw. eine in den im letzten Absatz beschriebenen Verfahrensschritten hergestellte Nut) den Fußbereich des Bandes aufnimmt. Mit anderen Worten kann das Band in dieser Nut geführt oder angeordnet sein.

Alternativ ist aber selbstverständlich von der Erfindung auch umfasst, dass das Band gerade in dem Bereich der Rohraußenseite angeordnet ist, in welchem diese Nut sich nicht befindet, also im Bereich zwischen den einzelnen Windungen der umlaufenden Nut. Insbesondere in Fällen, in welchen die Steigung relativ hoch ist (der Abstand zwischen den einzelnen Windungen der Nut also sehr gering) kann nämlich Platzmangel (für das Band) herrschen, wobei der Bereich zwischen den einzelnen Windungen dann auch nicht mehr im Wesentlichen glatt ausgebildet ist, sondern hügelartig, was das Anbringen des Bandes erschweren würde. In diesen Anwendungsfällen ist ein Einbringen des Bandes in die Nut zu empfehlen.

In der Nut kann zur Festlegung des Bandes Lötmaterial, bspw. eine Lötschnur, eingebracht bzw. eingespannt sein, welche dann aufgeschmolzen wird, um das Band in der Nut mithilfe des Lötmaterials bzw. Zusatzmaterials zu befestigen.

Gemäß einer besonders vorteilhaften Ausgestaltung der Erfindung weist der Rohrgrundkörper eine Wandstärke von maximal 0,5 mm auf. Dies ermöglicht Rippenrohre geringerer Wandstärke mit laserverschweissten Rippen oder Bändern. Insbesondere beträgt die Wandstärke maximal 0,4 mm, weiter insbesondere maximal 0,3 mm, noch weiter insbesondere maximal 0, 2 mm.

Die Wandstärke betrifft hierbei insbesondere die Wandstärke des noch unberippten Rohrgrundkörpers, welche Wandstärke insbesondere den nicht angeschmolzenen Bereichen des fertiggestellten Rippenrohres entspricht. In den anderen Bereichen, insbesondere in den Bereichen, in denen das Zusatzmaterial einen Fuß ausformt, kann die Wandstärke dann natürlich (geringfügig) über diesem Wert liegen. In diesem Sinne kann bei der zu betrachtenden Wandstärke auch von einer minimalen Wandstärke die Rede sein.

Gemäß einer der bevorzugtesten Ausführungsformen der Erfindung bildet das Zusatzmaterial bei dem erfindungsgemäßen Verfahren einen stabilisierenden Fuß aus. Ein derartiger Fuß ist beispielsweise von Walzprozessen zur Herstellung von Rippenrohren hinlänglich bekannt. Bei Laserschweissverfahren ist dieser aber eigentlich unüblich.

Bei dem stabilisierenden Fuß handelt es sich typischerweise um eine Materialansammlung, welche insbesondere auch Teile des Zusatzmaterials umfasst oder ganz von diesem ausgebildet wird, und welche vorteilhafterweise eine stabilisierende Wirkung hat. So kann der Fuß insbesondere den Winkel/die Ecke bedecken oder in dem Winkel/der Ecke ausgeformt sein, in dem/der das Band auf den Rohrgrundkörper trifft.

Es kann vorgesehen sein, dass sich der Fuß lediglich auf einer Seite des Bandes bildet oder angeordnet ist. Dies hängt von der Art und Anzahl der Laser und der Art der Einbringung des Zusatzmaterials ab, welche aus Zweckmäßigkeitsgründen typischerweise lediglich auf einer Seite des Bandes eingestrahlt bzw. eingebracht werden.

Der Fuß kann sich auch (jedenfalls teilweise) unterhalb des Bandes befinden, nämlich für den Fall, dass das Band in einer Nut angeordnet wird.

Der Fuß kann eine stabilisierende Wirkung haben. Alternativ oder zusätzlich kann der Fuß auch eine verbesserte Wärmeleitfähigkeitsfunktion des Rippenrohres bereitstellen. Der Fuß unterscheidet sich in diesem Sinne von einer herkömmlichen Laserschweissnaht dadurch, dass er mehr Material umfasst und in der Regel auch dicker ausgebildet ist.

Typischerweise ist das Band im Querschnitt I-förmig bzw. rechteckig ausgebildet ist, insbesondere wenn das Band in einer Nut angeordnet ist. Von der Erfindung sind vorteilhafterweise aber auch Ausführungen umfasst, in welchen ein L- oder J-förmiges Band gewählt oder verwendet wird. Ein derartiges Band weist neben dem langen Hauptschenkel typischerweise einen im Wesentlichen orthogonal hierzu abstehenden kurzen Schenkel auf, welcher mehr oder weniger satt an der Außenseite des Rohrgrundkörpers anliegen kann.

Wird ein derartiges Band verwendet, kann es vorteilhafterweise vorgesehen sein, dass der Fuß an der vom horizontalen Bandschenkel abgewandten Seite des Bandes ausgebildet wird. Auf diese Weise wird eine besonders stabile Ausführungsform des Rippenrohres ermöglicht, da das Band auf der einen Seite von dem kurzen Schenkel und auf der anderen Seite von dem Fuß abgestützt wird. Grundsätzlich werden von der Erfindung aber auch beispielsweise im Querschnitt U-förmige Bänder oder Ähnliches umfasst.

Weiterhin wird die der Erfindung zugrunde liegende Aufgabe durch ein entsprechendes Rippenrohr gemäß Patentanspruch 8 gelöst, welches demnach insbesondere die Besonderheit aufweist, dass der Kontaktbereich von Rohrgrundkörper und Band, insbesondere stabilisierendes, Zusatzmaterial aufweist, dessen Zusammensetzung vorzugsweise derjenigen des Rohrgrundkörpers und/oder des Bandes entspricht.

In diesem Sinne weist das erfindungsgemäße Rippenrohr insbesondere eine Ansammlung von Zusatzmaterial auf, welches vorteilhafterweise stabilisierende Wirkung hat. Man kann in diesem Sinne auch von einer (zusätzlichen) stabilisierenden Materialansammlung sprechen. Eine derartige Ansammlung an Zusatzmaterial ist typischerweise optisch für den Fachmann erkennbar.

Die Zusammensetzung von Materialansammlung bzw. Zusatzmaterial entspricht dabei insbesondere derjenigen des Bandes oder des Rohrgrundkörpers oder einer Mischung aus beiden.

An dieser Stelle sei angemerkt, dass sämtliche im Zusammenhang mit dem oben beschriebenen Verfahren erläuterten Vorteile und Unteransprüche bzw. besonderen Ausbildungen selbstverständlich auch auf den auf ein Rippenrohr gerichteten unabhängigen Anspruch übertragbar sind.

Lediglich exemplarisch soll also darauf hingewiesen werden, dass hiermit auch ein Rippenrohr als offenbart gelten soll mit einer Wandstärke von maximal 0,5 mm, insbesondere maximal 0,4 mm, weiterhin insbesondere von maximal 0,3 mm und/oder ein solches, bei welchem das Zusatzmaterial einen stabilisierenden Fuß ausbildet und/oder bei welchem das Band im Querschnitt im Wesentlichen L- oder J-förmig ausbildet ist und/oder bei welchem der Fuß an der vom kurzen horizontalen Bandschenkel abgewandten Seite des Bandes ausgebildet ist und/oder bei welchem sich das Zusatzmaterial insbesondere mit aufgeschmolzenem Rohrgrundkörper- und/oder Bandmaterial vermischt hat und/oder mit einer inneren Drall- oder Verwirbelungsstruktur. Diese Aufzählung ist explizit nicht abschließend zu verstehen.

Auch ist von der Erfindung ein Rippenrohr umfasst, bei welchem das Band in einer Nut, insbesondere einer umlaufenden Nut, welche vorzugsweise auf der Innenseite eine Gegenstruktur (wie eine Verwirbelungsstruktur) bildet, angeordnet ist.

Weitere Vorteile der Erfindung ergeben sich aus den gegebenenfalls nicht zitierten Unteransprüchen sowie aus der nun folgenden Figurenbeschreibung.

Darin zeigen:
- Fig. 1: in einer sehr schematischen, teilgeschnittenen Seitenansicht ein erfindungsgemäßes Rippenrohr in einem geraden Zustand, wobei die Befestigungsart des Bandes an dem Rohrgrundkörper (auf Grund von Zusatzmaterial, bezüglich einem Fuß) in dieser Figur - auch aus Gründen der Übersichtlichkeit - noch nicht erkennbar ist,
- Fig. 2: in einer Ansicht etwa gemäß Fig. 1, jedoch zusätzlich abgeschnitten dargestellt, ein zweites Ausführungsbeispiel eines erfindungsgemäßen Rippenrohres, wobei die Rippen und eine Drallstruktur eine gleiche Steigung aufweisen, jedoch versetzt angeordnet sind,
- Fig. 3: ein ebenfalls schematischer, vergrößerter Ausschnitt des erfindungsgemäßen Rippenrohres gemäß Fig. 1 in geschnittener Seitenansicht unter Darstellung einer einzelnen Rippe, jedoch unter zusätzlicher Darstellung des Zusatzmaterials bzw. Fußes,
- Fig. 4: der Abschnitt gemäß Kreis IV in Fig. 3 in vergrößerter Darstellung und unter Hinzufügung einer weiteren, noch nicht verschweißten Rippe, links von der in Fig. 3 dargestellten, bereits befestigten Rippe,
- Fig. 5: in einer Ansicht gemäß Fig. 3 ein Ausschnitt des erfindungsgemäßen Rippenrohres gemäß Fig. 2,
- Fig. 6: der Abschnitt gemäß Kreis VI in Fig. 5, wobei die Ansicht etwa derjenigen in Fig. 4 entspricht, also unter Hinzufügung einer weiteren, noch nicht verschweissten Rippe, links von der in Fig. 5 dargestellten, bereits befestigten Rippe,
- Fig. 7: in einer sehr schematischen, perspektivischen Unteransicht der Aufwicklungsprozess eines Bandes auf einen Rohrgrundkörper zwecks Berippung,
- Fig. 8a: in einer Ansicht etwa gemäß Ansichtspfeil VIII in Fig. 7 eine frontale, gegebenenfalls geschnittene Ansicht des Rohrgrundkörpers samt Bandes in einer sehr schematischen Darstellung, bei der Produktion eines Rippenrohres, welches etwa demjenigen gemäß Fig. 1 entspricht,
- Fig. 8b: in einer Ansicht gemäß Fig. 8a, unter zusätzlicher Darstellung eines Stütz- und Beaufschlagungswerkzeuges, der Herstellungsprozess eines Rippenrohres, wie es in Fig. 2 dargestellt ist,
- Fig. 9: eine schematische Ansicht eines, in eine Wendelform überführten Rippenrohres, wie es in Fig. 1 oder Fig. 2 dargestellt ist,
- Fig. 10: in einer Ansicht, etwa gemäß Fig. 3, eine Ausführungsform mit J-förmigem Band,
- Fig. 11: in einer Ansicht gemäß Fig. 10 ein weiteres Ausführungsbeispiel eines Rippenrohres mit innerer Drallstruktur und im Querschnitt J-förmigem Band,
- Fig. 12: ein schematischer, weiter vergrößerter Ausschnitt eines erfindungsgemäßen Rippenrohres gemäß einem weiteren Ausführungsbeispiel, bei welchem die Rohrwand nicht vollständig dargestellt ist und bei welchem das Band in einer Nut an der Außenseite des Rohrgrundkörpers angeordnet ist,
- Fig. 13a: in einer Ansicht gemäß Fig. 12, ein vorbereitender Verfahrensschritt, welcher das Einlegen einer Lötschnur in besagte Nut darstellt,
- Fig. 13b: in einer sehr schematischen Außenansicht ein Abschnitt eines Rohrgrundkörpers, bei in die Nut eingespannter Lötschnur, und
- Fig. 14: in einer Ansicht etwa gemäß Fig. 13a, die Nut bei an-bzw. aufgeschmolzener Lötschnur zur Ausformung eines Lötbades.

Der nachfolgenden Figurenbeschreibung und den Patentansprüchen sei vorangestellt, dass gleiche oder vergleichbare Teile gegebenenfalls mit identischen Bezugszeichen versehen sind, teilweise unter Hinzufügung kleiner Buchstaben oder von Apostrophs.

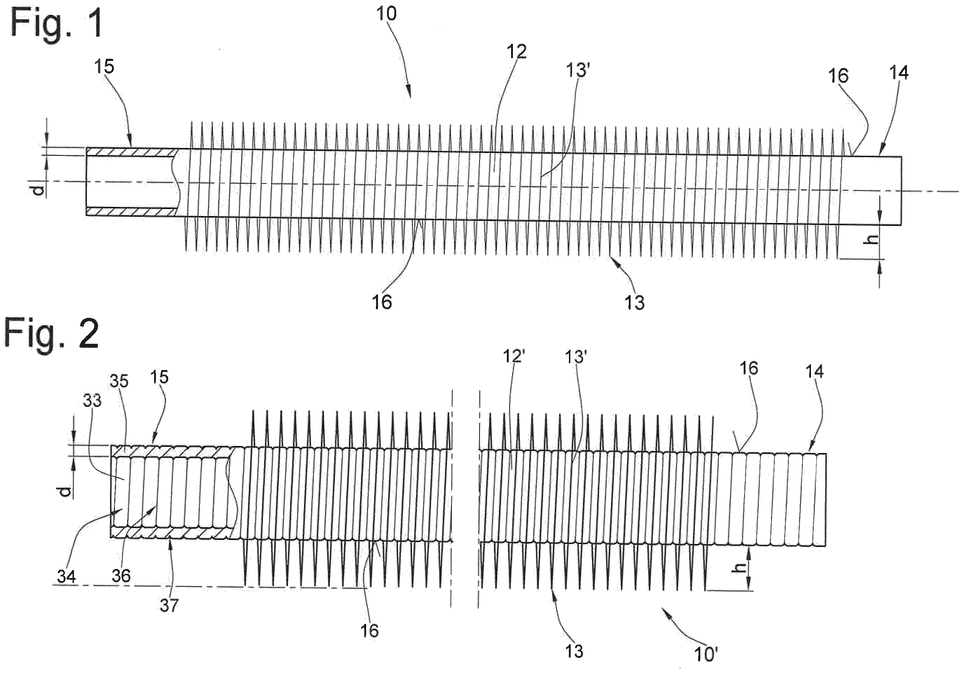

Fig. 1 zeigt zunächst ein bereits fertiggestelltes Rippenrohr 10, welches dem Grund nach aus zwei separaten Stücken, unter Hinzufügung von in Fig. 1 noch nicht erkennbarem Zusatzmaterial 22, hergestellt worden ist: So ist zunächst ein Rohrgrundkörper 12 vorgesehen, welcher als gerades Rundrohr ausgebildet ist. Um den Grundkörper 12 ist ein Kupferband 13 wendelförmig gewickelt und an dem Rohrgrundkörper 12 verschweisst. Das Band 13 bildet hierdurch also eine endlose Rippe 13' der Höhe h aus (wobei die Rippe 13' natürlich eine endliche, festgelegte Länge aufweist; die Rippe 13' ist mit anderen Worten durchgängig ausgebildet).

Das Band 13 lässt ausweislich Fig. 1 die Enden 14 und 15 des Rohrgrundkörpers 12 freistehen und ist an der Oberfläche 16 des Rohrgrundkörpers 12 verschweisst. Dieser ist, wie bereits erwähnt und insbesondere an dem linken Ende 15 des Rohrgrundkörpers in der teiltransparenten Darstellung ersichtlich, hohl ausgebildet, mit einer Wandstärke d, welche in dem vorliegenden Ausführungsbeispiel maximal 0,5 mm, insbesondere etwa 0,3 mm, beträgt.

Fig. 2 zeigt eine alternative Ausgestaltung des erfindungsgemäßen Rippenrohres, wobei der dort dargestellte Rohrgrundkörper 12' ebenfalls eine Wandstärke oder Dicke d von etwa 0,3 mm aufweist. Fig. 2 lässt desweiteren im geschnitten dargestellten Endbereich 15 erkennen, dass das Rippenrohr 10' an seiner Innenseite 33 mit einer Drall- oder Verwirbelungsstruktur 34 versehen ist.

Diese Drall- oder Verwirbelungsstruktur 34 erstreckt sich über die gesamte Länge des Rohrgrundkörpers 12' und bildet an der Innenseite 33 eine wendelförmige oder helixartige Struktur aus.

Fig. 2 lässt sich desweiteren entnehmen, dass die Drall- oder Verwirbelungsstruktur 34 jedenfalls in dem in Fig. 2 dargestellten Ausführungsbeispiel durch einen Umformprozess der Wand 35 des Rohrgrundkörpers 12' erzeugt wurde: So ist der steg- oder gratartigen Erhebung 36 der Drall- oder Verwirbelungsstruktur 34 an der Innenseite 33 des Rohres 10' an der Außenseite 16 eine entsprechende Vertiefung oder Nut 37 zugeordnet.

Die Erhebung 36 bzw. Drall- oder Verwirbelungsstruktur 34 dient dabei der besseren Wärmeübertragung zwischen der Rohrinnenseite 33 und dem in dem Rohr 10' geführten Medium, beispielsweise zu erhitzendes Wasser.

In Fig. 2 ist dabei angedeutet, dass in dem gezeigten Ausführungsbeispiel die Drall- oder Verwirbelungsstruktur 34 dieselbe Steigung aufweist wie die Steigung der Berippung des Rohres 10'. Mit anderen Worten ist das Band 13 bzw. sind die Rippenabschnitte 13' parallel zu der Drall- oder Verwirbelungsstruktur 34 bzw. der Erhebung 36 angeordnet. Beide Strukturen weisen jedoch einen Parallelversatz auf, was sich beispielsweise im mittleren Bereich des Rohres 10' gemäß Fig. 2 erkennen lässt, in welchem deutlich wird, dass die Nut 37 bzw. ihre Abschnitte an der Außenseite 16 (welche durch die Erzeugung der Drall- oder Verwirbelungsstruktur 34 entstehen) genau zwischen den einzelnen Rippenabschnitten 13' angeordnet ist/sind.

Die beiden Ausführungsbeispiele der Fig. 1 und 2 sind dabei lediglich exemplarisch zu verstehen, lassen in ihrer Darstellung beide jedoch das erfindungsgemäße Zusatzmaterial aus Gründen der Übersichtlichkeit noch nicht erkennen.

Zu Fig. 1 und 2 sei abschließend angemerkt, dass selbstverständlich auch Abweichungen der Ausgestaltung unter die Erfindung fallen: So kann ein nicht dargestellter Rohrgrundkörper selbstverständlich eine innere Drall- oder Verwirbelungsstruktur aufweisen und eine glatt ausgebildete Außenseite (von den Rippen abgesehen). Dies ist beispielsweise für den Fall möglich, dass ein vorgefertigtes, glattes Rundrohr verwendet wird, welches bereits im Vorfeld (oder bei seiner Herstellung) mit einer inneren Drall- oder Verwirbelungsstruktur versehen wird (beispielsweise kann auch eine externe Drall- oder Verwirbelungsstrukur im Rohrgrundkörper 12 bzw. 12' vorgesehen werden, insbesondere durch Verklebung, Verdrallung oder Ähnliches).

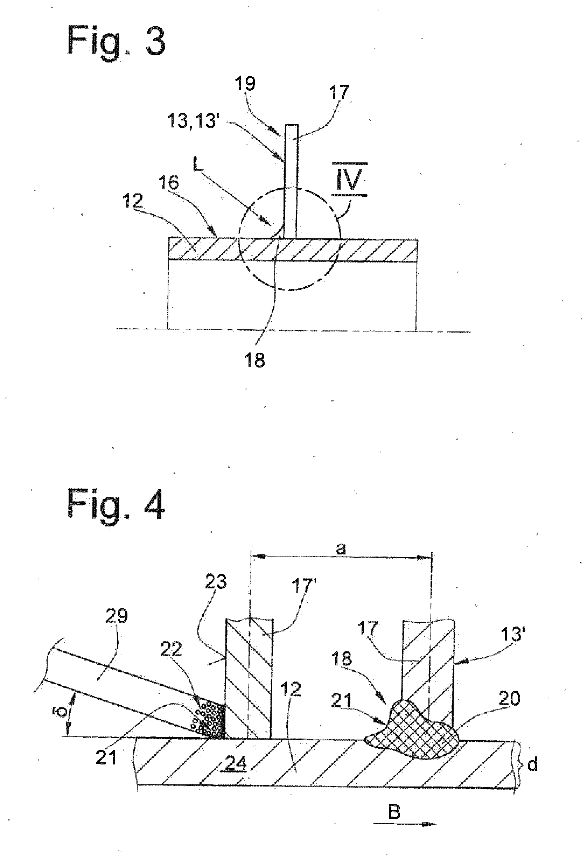

Das erfindungsgemäße Herstellungsverfahren für die Rippenrohre 10 bzw. 10' soll nun anhand der Figuren 3 bis 8 näher erläutert werden:
So zeigt Fig. 3 zunächst in einer rein schematischen, teilgeschnittenen Darstellung die vergrößerte Einzeldarstellung eines bereits verschweißten Abschnittes 17 der Rippe 13' gemäß Fig. 1. Die Rippe 13' ist in dem dargestellten Bereich an der Rohroberfläche 16 verschweißt. Die Besonderheit besteht in einer Anhäufung 18 von Material, welche auch als Fuß bezeichnet werden kann. Dieser Fuß 18 erstreckt sich vorzugsweise auf einer Seite 19 des Abschnittes 17, wobei es sich bei der Seite 19 um diejenige Seite 19 handelt, auf welche während des Befestigungsverfahrens auf später noch genauer beschriebene Weise ein Laser einstrahlt. Die Seite 19 ist also diejenige Seite, auf welche die Lasereinstrahlrichtung L deutet.

Fig. 4 zeigt in ihrem rechten Darstellungsbereich besagten Abschnitt 17 der Rippe 13' gemäß Fig. 3 im bereits verschweißten Zustand. Fig. 4 lässt dabei die bereits erstarrte Schmelze 20 im Kontaktbereich 21 zwischen Rohrgrundkörper 12 und Band 13 erkennen: Die Schmelze 20 besteht anteilig aus Material sowohl des Rohrgrundkörpers 12, des Bandes 13 (bzw. der Rippe 13') und einem eingebrachten Zusatzmaterial 22, wobei dessen Zusammensetzung entweder dem Material des Bandes 13 oder des Rohrgrundkörpers 12 oder einer Mischung aus den beiden Materialien/Materialzusammensetzungen entspricht.

Die Besonderheit der Erfindung besteht also im Wesentlichen darin, dass die in Fig. 4 dargestellte Schmelze 20 Materialien enthält, welche denen des Bandes 13 und/oder des Rohrgrundkörpers 12 entsprechen.

Der von der Schmelze 20 ausgebildete Fußbereich 18 stabilisiert die Rippe 13. Die bezüglich Fig. 4 rechtsseitig dargestellte Rippe 13' befindet sich in Berippungsrichtung B (als bereits festgelegter Abschnitt) weiter vorne als der in Fig. 4 ebenfalls dargestellte Abschnitt 17'. Dieser Abschnitt 17' der Rippe 13' bzw. des Bandes 13 wird in Fig. 4 gerade in dem Kontaktbereich 21 (welcher aufgrund der geraden Rohroberfläche 16 und der geraden Seitenkante 23 der Rippe 13' einer im Wesentlichen L-förmigen Kontaktfläche zugeordnet ist) verschweisst.

Hierzu fällt ein Laserstrahl 29, beispielsweise ein Faserlaserstrahl, eines in Fig. 4 noch nicht dargestellten Lasers unter einem Winkel δ, insbesondere einem geringen Winkel δ, auf den Kontaktbereich 21. Der Laserstrahl 29 bestrahlt hierbei in der Regel sowohl Material des Bandes 13 bzw. der Rippe 13' bzw. des Abschnittes 17' als auch Material des Rohrgrundkörpers 12, insbesondere an dessen Oberfläche 16.

Die Besonderheit des erfindungsgemäßen Verfahrens liegt nun darin, dass sich in diesem Kontaktbereich 21, beispielsweise im Bereich der beiden Schenkel des ausgebildeten L, Zusatzmaterial 22 befindet, welches beispielsweise in Pulverform vorliegt und gemeinsam mit dem Material des Rohrgrundkörpers 12 bzw. des Bandes 13 von dem Laserstrahl 29 aufgeschmolzen wird.

Auf diese Weise entsteht die in Fig. 4 rechts dargestellte Schmelze 20, welche nach dem Erstarrvorgang den stabilisierenden Fuß 18 bereitstellt.

Aufgrund eben dieses Fuß 18 braucht sich die Schmelze zur Erreichung einer gewissen Stabilität der Bandbefestigung auch nicht so sehr in die Wand des Rohrgrundkörpers 12 hineinzuerstrecken. Da die vorliegende Erfindung bei geringen Wandstärken d von weniger als 0,5 mm besonders vorteilhaft eingesetzt werden kann, ersetzt der Fuß 18 bzw. das Zusatzmaterial 22 die Notwendigkeit eines tieferen Einbrandes. Der Einbrand erfolgt daher beispielsweise lediglich bis zu einer Tiefe von maximal d/2.

Auch wenn Fig. 4 die Dicke d des Rohres aus Gründen der Übersichtlichkeit nicht maßstabsgetreu darstellt, muss man wohl davon ausgehen, dass sich bei einem herkömmlichen Schweissvorgang, bei welchem kein Zusatzmaterial 22 verwendet wird, die entsprechende Schmelze bis nahe an den unteren Rand der dargestellten Wand 24 des Rohrgrundkörpers 12 erstrecken (also eine Einbrandtiefe von nahezu d aufweisen) müsste, um eine gewisse Stabilität zu erzielen. Dies wird mit der vorliegenden Erfindung umgangen.

Zu Fig. 4 sei noch angemerkt, dass sich der Abschnitt 17 des Bandes 13 in Berippungsrichtung B vor dem Abschnitt 17' befindet, so dass der linke Abschnitt gemäß Fig. 4 sozusagen den Zustand des Verschweißens eines Abschnittes des Bandes darstellt und die rechte Seite gemäß Fig. 4 dann den fertigen, angeschweißten Zustand eines Abschnittes des Bandes. Weitere Abschnitte des Bandes würden sich natürlich insbesondere in Berippungsrichtung B (und somit bereits verschweisst) mit definierter Rippensteigung anschließen.

Auch sei auf eine gewisse Diskrepanz zwischen den Figuren 3 und 4 hinsichtlich des Fußes 18 hingewiesen: Während die Figur 3 anzudeuten scheint, dass dieser Fuß völlig separat und von den Materialien des Bandes bzw. Abschnittes 17 und dem Rohrgrundkörper 12 ausgebildet ist, verdeutlicht Fig. 4 in einer vergrößerten Darstellung die tatsächliche Ausformung der Schmelze 20, welche erkennen lässt, dass der Fuß 18 insbesondere als Teil einer Schmelze ausgebildet sein kann. Die Darstellung gemäß Fig. 4 spiegelt insofern wohl eher das reale Ergebnis des Schweissvorganges wieder, während die Fig. 3 eher als schematische Prinzipdarstellung zur Einführung des Konzepts des Fußes zu deuten ist. Von der Erfindung umfasst sind jedoch auch Ausführungsformen, bei welchen das Zusatzmaterial 18 im Schweissverfahren den Hauptteil der Schmelze ausbildet (während Rohrgrundkörper 12 und Band 17 nur geringfügig angeschmolzen werden).

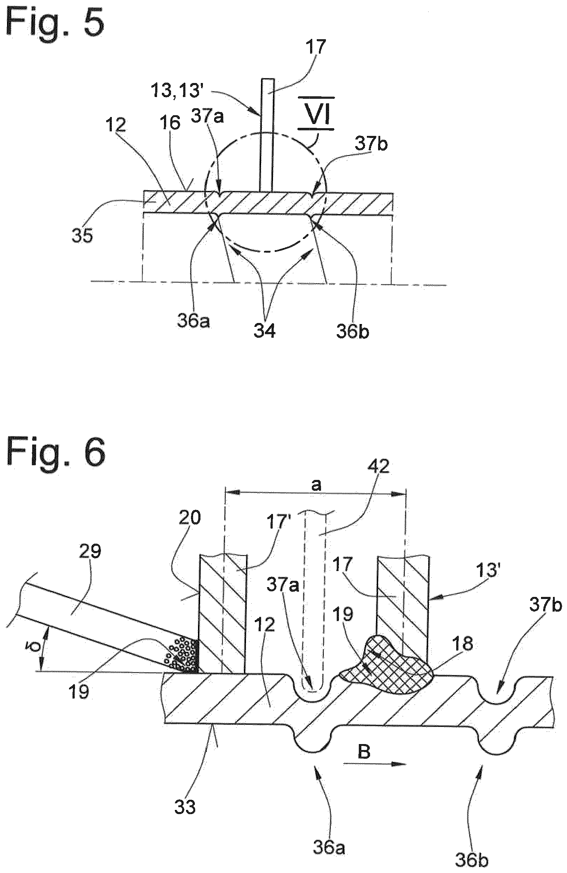

Die Fig. 5 und 6 zeigen dann den soeben zu den Fig. 3 und 4 beschriebenen Zustand bzw. Ablauf im Hinblick auf ein Rohr mit innerer Drallstruktur.

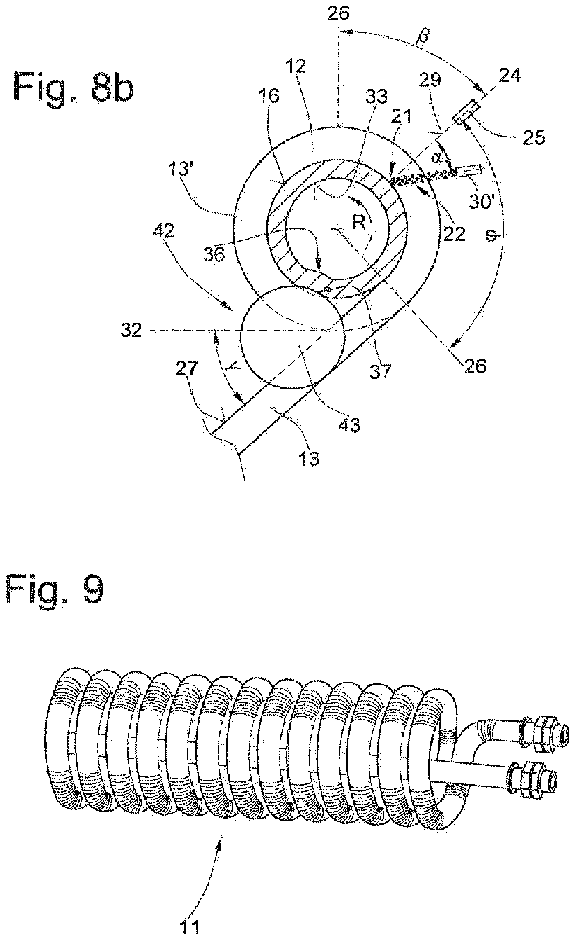

Die Ausführungen sind insofern im Wesentlichen übertragbar, wobei aber insbesondere zu Fig. 6 anzumerken ist, dass dort im Bereich der Nut 37a - lediglich gestrichelt - ein Werkzeug 42 angedeutet ist, welches die Drall- oder Verwirbelungsstrukur 34 an der Innenseite 33 des Rohres erzeugt. Das Werkzeug 42 drückt hierbei von außen auf das Rohr und erzeugt dabei die Nut 37a bzw. 37b, was zur Struktur 36a bzw. 36b an der Innenseite 33 führt. Dies geschieht in demselben Werkzeugbereich, in dem auch der Laserstrahl 29 eingesetzt wird. Auf dieses Werkzeug wird im Zusammenhang mit Fig. 8b aber noch genauer eingegangen werden.

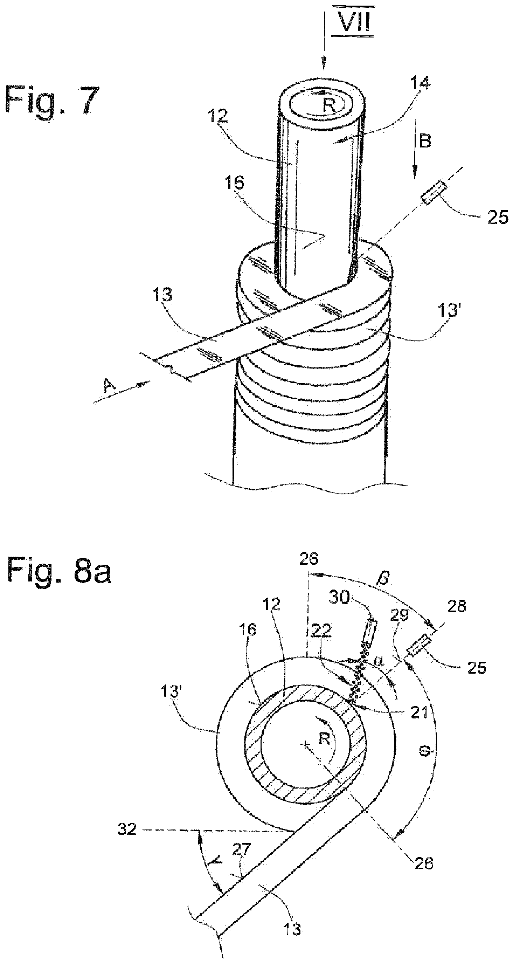

Fig. 7 verdeutlicht in einer perspektivischen, aber gleichfalls schematischen Ansicht das Bewickeln des Rohrgrundkörpers 12 mit dem Band 13. Bereits Fig. 7 ist hierbei zu entnehmen, dass das Band 13 zunächst gerade, im Wesentlichen entlang einer Abwicklungsrichtung A, auf den Rohrgrundkörper 12 zuläuft und diesen dann an seiner Oberfläche 16 tangential kontaktiert. Der Rohrgrundkörper 12 ist an seinen Enden 14 - wie allerdings nicht dargestellt - endseitig eingespannt, um ihn in Rotationsrichtung R anzutreiben. Der Rohrgrundkörper 12 kann bei diesem Antrieb das Band 13 mitziehen und dieses beispielsweise von einer Vorratsrolle oder einem Teller oder einem Bett (ebenfalls nicht dargestellt) gerichtet und unter einer definierten Zugrichtung abziehen. Zusätzlich kann auch ein Antrieb für die Vorratsrolle (beispielsweise ein Spulenantrieb) vorgesehen sein.

Aufgrund dieser Zugkraft und einer gegebenenfalls vorhandenen Vorschubbewegung des Bandes 13 wird das Band 13 an der Oberfläche 16 des Rohrgrundkörpers 12 kontinuierlich und fortschreitend angestellt.

Hier kann dann der in Fig. 7 ebenfalls angedeutete Laser 25, beispielsweise ein Faserlaser, in den Anstellbereich einstrahlen und das Band 13 an dem Rohrgrundkörper 12 verschweissen.

Bei Fig. 7 kann es sich also um die Darstellung eines Verfahrens zur Herstellung eines Rohres nach Fig. 1 oder 2 handeln, wobei im letztgenannten Fall die Nut 37 in der Oberfläche aus Gründen der Übersichtlichkeit halber nicht zu erkennen wäre, oder aber es handelt sich um eine externe Drallstruktur, welche im Inneren des Körpers bei glatter Außenfläche angebracht ist (vgl. obige Anmerkungen zur Drallstruktur).

Fig. 8a verdeutlicht, dass die Beaufschlagung des Rohrgrundkörpers 14 mit dem Band 13 etwa ab einem Bereich beginnt, welcher dort mit einer radialen Achse 26 gekennzeichnet ist.

Das Band 13 liegt ab diesem Bereich, also mit seiner Unterseite 27 kontaktierend an der Oberseite 16 des Rohrgrundkörpers 12 an. In Folge der Rotationsbewegung in Rotationsrichtung R läuft das Band 13 sodann, die Oberseite 16 des Rohrgrundkörpers 12 kontaktierend, über einen Winkelbereich ϕ mit dem Rohrgrundkörper 12 mit, bevor es im Bereich einer mit 28 bezeichneten radialen Achse von einem Laserstrahl 29 (des Lasers 25) mit dem Rohrgrundkörper 12 verschweisst wird.

In dem dargestellten Ausführungsbeispiel beträgt der Winkel ϕ ungefähr 90 Grad. Er kann aber insbesondere zwischen etwa 30 und 120 Grad betragen. Entscheidend ist dabei, dass das Band 13 über einen gewissen Winkel ϕ mitgenommen wird, um einen idealen Zeitpunkt für das Verschweissen zu erreichen.

Der Laserstrahl 29 wird von dem lediglich sehr schematisch dargestellten Laser 25 erzeugt.

Die Besonderheit der Erfindung besteht nunmehr darin, dass dem Kontaktbereich 21 Zusatzmaterial 22 zugeführt wird, in dem Ausführungsbeispiel nämlich über eine ebenfalls sehr schematisch dargestellte Abgabevorrichtung 30.

Die Abgabevorrichtung 30 kann beispielsweise eine Düse umfassen oder von dieser ausgebildet sein. Die Abgabevorrichtung 30 kann dabei dafür sorgen, dass das Zusatzmaterial 22, welches typischerweise staub- oder pulverförmig vorliegt, in den Kontaktbereich 21 geführt wird. Hierzu kann die Abgabevorrichtung 30 beispielsweise Sprüh- und/oder Lenkluft abgeben oder Ähnliches. Mit anderen Worten kann man auch davon sprechen, dass die Abgabevorrichtung pulverartiges Zusatzmaterial 22 in den Laserstrahl 29 injiziert.

Je nach gewünschter Anwendung kann die Abgabevorrichtung 30 dabei unterschiedlich ausgerichtet sein. Das Zusatzmaterial 22 kann beispielsweise zeitlich vor dem Einstrahlen des Laserstrahls 29 in den Kontaktbereich eingebracht bzw. hingeführt werden oder aber im Wesentlichen gleichzeitig. Das in Fig. 8a dargestellte Ausführungsbeispiel impliziert für diesen Ausführungsfall zweiteres. Vorteilhafterweise kann das Zusatzmaterial 22 bereits (jedenfalls geringfügig) erwärmt werden, bevor es den Kontaktbereich 21 erreicht. Hierfür wird das Zusatzmaterial 22 bezüglich seiner Hauptabgaberichtung in einem eher spitzen Winkel im Vergleich zu dem Laserstrahl 29 abgegeben. Vorliegend zeigt das Ausführungsbeispiel der Fig. 8a etwa einen Winkelversatz α, welcher kleiner als 90 Grad sein sollte. Vorteilhafterweise ist dieser Winkel α so gering wie möglich zu halten, beispielsweise unter 45 Grad, weiter vorteilhafterweise unter 20 Grad. Auch kann der Abstand der Abgabevorrichtung 30 zum Kontaktbereich 21 variabel einstellbar sein oder auch der Ausrichtungswinkel α.

Fig. 8a zeigt somit einen Herstellungsprozess für ein Rippenrohr 10, wie es beispielsweise in Fig. 1 dargestellt ist.

Fig. 8b zeigt hingegen einen Herstellungsprozess für ein Rippenrohr 10', wie es beispielsweise in Fig. 2 dargestellt ist. Der wesentliche Unterschied im Vergleich von Fig. 8a zu Fig. 8b liegt darin, dass gemäß Fig. 8b ein Werkzeug 42 nach Art einer Stützeinrichtung für das Band 13 (und gegebenenfalls auch das Rohr 12) vorgesehen ist. Von dem Werkzeug 42 ist in der Ansicht gemäß Fig. 8b lediglich eine in Richtung B hintere Stützscheibe 43 dargestellt, welche in Richtung B vor dem Band 13 angeordnet ist, dieses entgegen der Richtung B aber stützt bzw. sichert.

Eine weitere, in Fig. 8b nicht dargestellte Stützscheibe kann dann in Richtung B also in die Figurenebene gemäß Fig. 6 hinein, hinter dem Band 13 angeordnet sein und ein Verschieben des Bandes 13 in Richtung B verhindern.

Beide Stützscheiben (43 und die nicht dargestellte Scheibe) können hierbei auf derselben Achse angeordnet sein. Die Besonderheit der Stützscheibe 43 liegt darin, dass sie derart angeordnet und ausgebildet ist, dass sie den Rohrgrundkörper 12 umformend beaufschlagt. Insbesondere kann die Stützscheibe 43 daher einen größeren Radius oder Durchmesser aufweisen als die parallele, nicht dargestellte Stützscheibe. Die Scheibe 43 drückt hierbei auf die Außenseite 16 des Rohrgrundkörpers, was an der Innenseite 13 des Körpers 12 dann zu der Erhebung 36 führt, welche die Drall- oder Verwirbelungsstruktur 34 ausbildet, die in Fig. 6 nur angedeutet ist, unter gleichzeitiger Erzeugung einer Nut 37 an der Außenseite 16.

Da auch der Laser 25 im selben Arbeitsschritt für ein Verschweissen von Band 13 und Körper 12 sorgt, handelt es sich bei dem dargestellten Verfahren also um ein kombiniertes Laser- und Drückverfahren.

Abgesehen von dem Werkzeug 42 entspricht die Herstellung des Rippenrohres 10' (wie es in Fig. 2 dargestellt ist) gemäß Fig. 8b dem Verfahren, wie es in Fig. 8a beschrieben ist.

Lediglich zur Verdeutlichung möglicher, geringfügiger unterschiedlicher Ausgestaltungen ist in diesem Ausführungsbeispiel gemäß Fig. 8b die Abgabevorrichtung 30 näher an dem Kontaktbereich 21 angeordnet und auch unter einem anderen Winkel α angeordnet.

Stützscheiben können typischerweise auch bei dem in Fig. 8a dargestellten Verfahren vorhanden sein, sind dort aber so ausgeführt, dass sie nicht für ein Eindrücken des Rohres sorgen.

Schließlich zeigt Fig. 9 ein typisches Beispiel für eine Endform, wie sie aus dem noch geraden Rippenrohr 10 oder 10' herausgearbeitet werden kann: Die fertige Rippenrohrwendel 11 wird, wie sie in Fig. 8 dargestellt ist, beispielsweise bei Wärmetauschern eingesetzt und kann mit einem Medium durchspült werden.

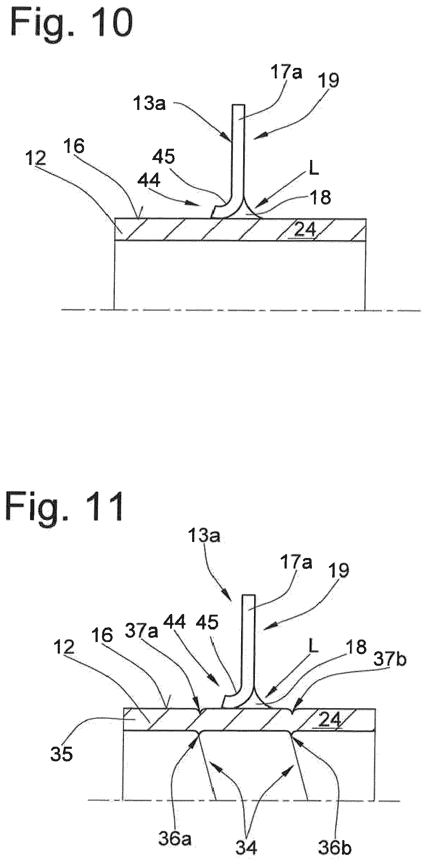

An dieser Stelle soll anhand der Figuren 10 und 11 noch eine weitere Ausgestaltung der Erfindung beschrieben werden: So zeigt Fig. 10 in einer Ansicht, etwa gemäß Fig. 3, einen Abschnitt 17a eines Bandes 13a, welcher im Querschnitt nicht I-förmig ausgebildet ist, wie bei den vorhergenannten Ausführungsbeispielen. Vielmehr ist der untere Teil 44 des Abschnittes 17 abgebogen, so dass der Abschnitt 17a oder das Band 13a im Querschnitt im Wesentlichen J-förmig oder L-förmig ausgebildet ist.

Der Abschnitt 17a bzw. das Band 13a weist daher in seinem Fußbereich 44 einen gebogenen oder gekröpften Anlageabschnitt 45 auf. Dieser ist auch als kurzer Schenkel (der J- oder L-Form) bezeichenbar.

Auch mit einer derartigen Bandform ist das erfindungsgemäße Verfahren unter Einsatz von Zusatzmaterial 22 besonders vorteilhaft ausführbar: So ist ausweislich Fig. 10 der Fuß 18 bzw. das Zusatzmaterial in dem dargestellten Ausführungsbeispiel auf derjenigen Seite 19 des Abschnittes 17a bzw. des Bandes 13a angeordnet, welcher dem kurzen Schenkel oder Anlageabschnitt 45 des Bandes 13a abgewandt ist.

Auf diese Weise kann, wie die Darstellung der Fig. 10 auf den ersten Blick erkennen lässt, eine besonders hohe Stabilität des fertiggestellten Rippenrohres bzw. eine besonders hohe Stabilität der Anbringung des Bandes 13a am Rohrgrundkörper 12 bzw. an dessen Wand 24 erreicht werden (angemerkt sei noch, dass es sich bei der Seite 19 um diejenige Seite handelt, auf welche die Lasereinstrahlrichtung L typischerweise während des Herstellungsprozesses zeigt).

Fig. 11 lässt dann erkennen, dass das Ausführungsbeispiel gemäß Fig. 10 mit der Anordnung von Fuß und Anlagebereich selbstverständlich auch bei einem Rippenrohr mit innerer Drallstruktur erreichbar bzw. ausführbar oder einsetzbar ist.

Wie zu Fig. 3 und 5 sei auch zu Fig. 10 und 11 angemerkt, dass diese bezüglich der Materialien keinen wahren Querschnitt zeigen, sondern vielmehr eine funktionelle Gliederung, da sich in einem Querschnitt zeigen würde, dass sich Zusatz- und Band- und Rohrmaterial vermischen (Schmelze).

Abschließend soll bezüglich Fig. 11, vielmehr noch bezüglich Fig. 6, darauf hingewiesen werden, dass es durchaus möglich ist, das Band 13 (oder 13a), bzw. den jeweiligen Abschnitt 17 (oder 17a), in die äußeren Nuten 37 des Körpers einzubringen. Dies hängt allerdings von der jeweiligen Ausgestaltung bzw. gewünschten Konfiguration ab. In diesem Fall sollten dann eine besonders breite Nut und besonders schmale Rippen vorgesehen sein. Auch hierbei kann theoretisch ein im Querschnitt J- oder L-förmiges Band, eher aber ein I-förmiges Band unter Einsatz von Zusatzmaterial befestigbar sein.

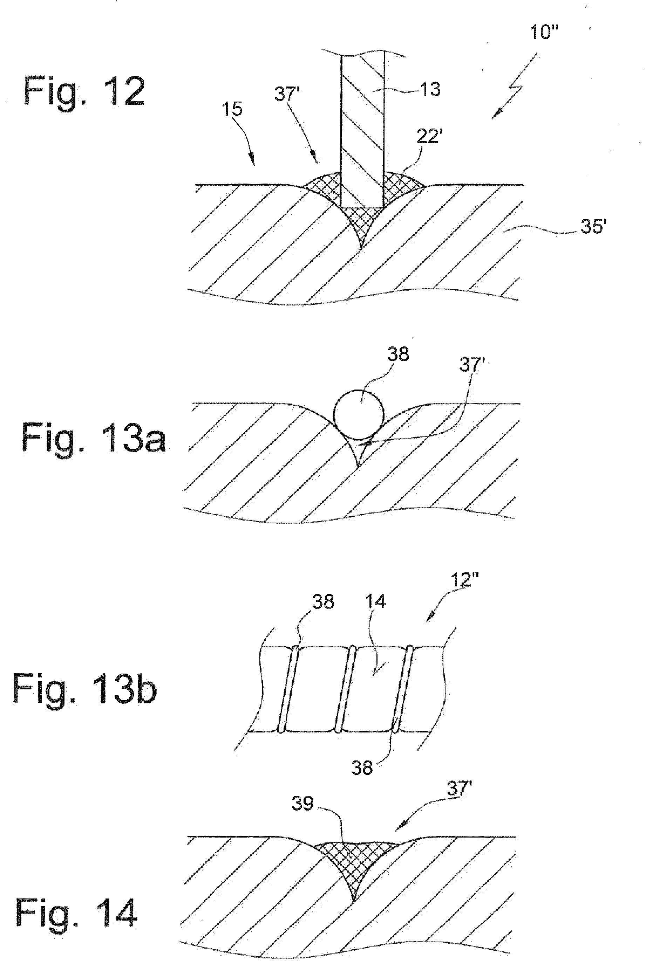

Anhand der Fig. 12 bis 14 sei abschließend ein letztes Ausführungsbeispiel eines erfindungsgemäßen Verfahrens zur Herstellung eines erfindungsgemäßen Rippenrohres beschrieben:
Dabei zeigt Fig. 12 zunächst in einer sehr schematischen, seitlichen Schnittansicht einen noch vergrößerten Ausschnitt einer Rohrwand 35' eines Rippenrohres 10". Wie das Ausführungsbeispiel gemäß den Fig. 5 und 6 weist das Rippenrohr 10" an seiner Außenseite 15 eine umlaufende, helixartige bzw. spiralartige Nut 37' auf. Im Gegensatz zu der Nut 37 gemäß der Fig. 6 ist diese exemplarisch eher spitz zulaufend (anstatt abgerundet) dargestellt, was nur die Variabilität der Nutform verdeutlichen soll. Bei beiden Ausführungsbeispielen ist die Form der Nut allerdings nicht von gesteigerter Relevanz.

Fig. 12 zeigt den prägnanten Unterschied zu den vorigen Ausführungsbeispielen, insbesondere zu denen gemäß Fig. 5 und 6. So ist das Band 13 nicht im Bereich zwischen den Windungen der Nut 37 befindlich (wie noch bei dem Ausführungsbeispiel gemäß Fig. 5 und 6), sondern vielmehr in der Nut angeordnet. Eine derartige Konfiguration ist insbesondere bei Rippenrohren vorteilhaft, bei welchen der Abstand zwischen den einzelnen Windungen der Nut sehr gering ist, also bei welchen die Nut (und somit auch das Band) eine hohe Steigung aufweist.

Das Band 13 ist in der Nut, wie in Fig. 12 dargestellt, mithilfe von Zusatzmaterial 22' befestigt.

Eine weitere Besonderheit betrifft das Verfahren, mit welchem das Band 13 in der Nut festgelegt ist: So zeigt Fig. 13a in einer Ansicht gemäß Fig. 12 die besagte Nut 37' bevor das Band 13 eingesetzt ist. In der Nut 37' liegt ausweislich Fig. 13a vorher eine Lötschnur 38 ein. Diese wird ausweislich Fig. 13b in der Nut 37' einliegend um den Rohrgrundkörper 12" herum eingespannt bzw. verspannt. Dies kann maschinell erfolgen.

Anschließend kann die Lötschnur 38, wie Fig. 14 zeigt, zunächst optional vorangeschmolzen bzw. vollständig aufgeschmolzen werden, so dass in der Nut 37' eine Lötschmelze 39 entsteht.

In die Lötschmelze 39 kann das Band 13 dann entweder lediglich hineingetaucht werden.

Alternativ und vorteilhafterweise wird das Band 13 in der Nut 37'dann aber noch mit einem Laser bearbeitet bzw. verschweißt. Hierbei kann neben dem (ggf. schon vorgeschmolzenen) Lötmaterial 38, 39 auch Material des Bandes 13 bzw. des Rohrgrundkörpers 12" mit aufgeschmolzen werden, so dass es zu einem sehr stabilen Verschweißvorgang kommt, wobei sich insbesondere das Lötmaterial mit dem Material von Band 13 und/oder Rohrgrundkörper 12" vermischen kann. Hierbei ist es vorteilhaft, dass auch das Zusatzmaterial 22' nur aus Material besteht, welches im Band und/oder im Rohrgrundkörper vorkommt bzw. welches diese Elemente ausbildet.

## Patentansprüche

1. Verfahren zur Herstellung eines Rippenrohres (10, 10', 10"), bei welchem ein, insbesondere aus Edelstahl oder Kupfer bestehender, Rohrgrundkörper (12, 12', 12") auf seiner Außenseite (14), mit einem, insbesondere aus Kupfer bestehenden, Band (13), vorzugsweise wendelförmig, berippt wird, wozu das Band (13) an dem Rohrgrundkörper (12, 12', 12") unter Einsatz eines Laserstrahls (29) befestigt, insbesondere verschweißt, wird, **dadurch gekennzeichnet, dass** dem Kontaktbereich (21) von Rohrgrundkörper (12, 12', 12") und Band (13) Zusatzmaterial (22) zugeführt wird, dessen Materialzusammensetzung, insbesondere derjenigen des Rohrgrundkörpers und/oder Bandes entspricht.

2. Verfahren zur Herstellung eines Rippenrohres (10, 10', 10") nach Anspruch 1, **dadurch gekennzeichnet, dass** das Zusatzmaterial (22) beim Befestigungsvorgang aufgeschmolzen wird, und sich insbesondere mit aufgeschmolzenem Rohrgrundkörper- und/oder Bandmaterial vermischt.

3. Verfahren zur Herstellung eines Rippenrohres (10, 10') nach einem der voranstehenden Ansprüche, **dadurch gekennzeichnet, dass** das Zusatzmaterial (22) im Wesentlichen während dem Befestigungsvorgang, insbesondere einem Laserschweissvorgang, zugeführt wird.

4. Verfahren zur Herstellung eines Rippenrohres (10, 10') nach einem der voranstehenden Ansprüche, **dadurch gekennzeichnet, dass** das Zusatzmaterial (22) in Pulver- oder Staubform zugeführt wird, insbesondere über eine Abgabevorrichtung, vorzugsweise eine Abgabedüse (30, 30').

5. Verfahren zur Herstellung eines Rippenrohres (10") nach einem der Ansprüche 1 bis 3, **dadurch gekennzeichnet, dass** das Zusatzmaterial (22') in fester Form zugeführt wird, insbesondere als Lötschnur (38), welche vorteilhafterweise an der Außenseite (14) des Rohrgrundkörpers (12") verspannt wird.

6. Verfahren zur Herstellung eines Rippenrohres (10', 10") nach einem der voranstehenden Ansprüche, **gekennzeichnet durch** das Erzeugen oder Übernehmen einer, insbesondere wendelförmigen, Drall- oder Verwirbelungsstruktur (36) an der Innenseite (33) des Rohrgrundkörpers (12'), welche insbesondere durch eine Druckbeaufschlagung der Rohrkörperaußenseite (14) erzeugt wird oder wurde.

7. Verfahren zur Herstellung eines Rippenrohres (10") nach einem der voranstehenden Ansprüche, **dadurch gekennzeichnet, dass** das Band (13) in einer Nut (37') der Rohrkörperaußenseite (14) angeordnet wird, in welcher insbesondere an- oder aufgeschmolzenes Zusatzmaterial (22') angeordnet ist.

8. Rippenrohr (10, 10', 10"), insbesondere hergestellt nach einem der voranstehenden Ansprüche, umfassend einen Rohrgrundkörper (12, 12', 12"), insbesondere aus Edelstahl oder Kupfer, welcher auf seiner Außenseite (14), vorzugsweise wendelförmig, mit einem Band (13), insbesondere aus Kupfer, berippt ist, **dadurch gekennzeichnet, dass** der Kontaktbereich (21) von Rohrgrundkörper (12, 12', 12") und Band (13), insbesondere stabilisierendes, Zusatzmaterial (22) aufweist, dessen Materialzusammensetzung derjenigen des Rohrgrundkörpers und/oder Bandes entspricht.

9. Rippenrohr (10, 10', 10") nach Anspruch 8, **dadurch gekennzeichnet, dass** der Rohrgrundkörper (12, 12'), insbesondere in den nicht angeschmolzenen Bereichen, eine Wandstärke (d) von maximal 0,5 mm aufweist, insbesondere von maximal 0,4 mm, weiter insbesondere von maximal 0,3 mm.

10. Rippenrohr (10, 10', 10") nach Anspruch 8 oder 9, **dadurch gekennzeichnet, dass** das Zusatzmaterial (22) einen stabilisierenden Fuß (18), insbesondere an einer Seite (19) des befestigten Bandes (13), ausbildet.

11. Rippenrohr (10, 10') nach einem der Ansprüche 8 bis 10, **dadurch gekennzeichnet, dass** das Band (13a) im Querschnitt im Wesentlichen L-oder J-förmig ausgebildet ist.

12. Rippenrohr (10, 10') nach den Ansprüchen 10 und 11, **dadurch gekennzeichnet, dass** der Fuß (18) an der vom kurzen oder horizontalen Bandschenkel (45) abgewandten Seite (19) des Bandes (13a) ausgebildet ist beziehungsweise wird.

13. Rippenrohr (10") nach einem der Ansprüche 8 bis 12, **dadurch gekennzeichnet, dass** das Band (13) in einer Nut (37') der Außenseite (14) des Rohrgrundkörpers (12") angeordnet ist, in welcher insbesondere auch Zusatzmaterial (22') angeordnet ist.
